# EUROPEAN PATENT SPECIFICATION

(11) **EP 0 409 518 B1**
(45) Date of publication and mention of the grant of the patent: **30.03.1994**
(21) Application number: 90307732.9
(22) Date of filing: 16.07.1990
(51) Int. Cl.: B60C 3/04

(54) **Motorcycle tyre**
Motorradreifen
Pneumatiques pour motocyclette

(30) Priority: 20.07.1989 JP 189231/89
(43) Date of publication of application: 23.01.1991
(73) Proprietor: SUMITOMO RUBBER INDUSTRIES LIMITED, Kobe-shi Hyogo-ken (JP)
(72) Inventor: Suzuki, Shigehiko, Amagasaki-shi, Hyogo-ken (JP)
(74) Representative: Stewart, Charles Geoffrey

(56) References cited:
- EP-A- 0 314 445
- DE-A- 2 939 161
- PATENT ABSTRACTS OF JAPAN vol. 12, no. 419 (M-760)(3266) 08 November 1988,& JP-A-63 154402 (SUMITOMO RUBBER INDUSTRIES Ltd) 27 June 1988

## Description

The present invention relates to a pneumatic tyre for motorcycles, in which running stability under low pressure service conditions is improved.

In general, when running off the road, motorcycle tyres designed for use both on the road and off the road, are inflated to a lower air pressure than the normal road use air pressure, for example 0.5 to 0.25 kgf/sq.cm (which is about 10 to 20% of the road use air pressure). Thus the stiffness of the tread portion is reduced, and the contact area of the tread surface with the ground is increased, and as a result a large ground gripping force is obtained.

However, in a conventional motor cycle tyre decreasing the air pressure in this way decreases the stiffness of the tyre in the sidewall portions as well as in the tread portion, and as a result running stability is lost under such low pressure service conditions.

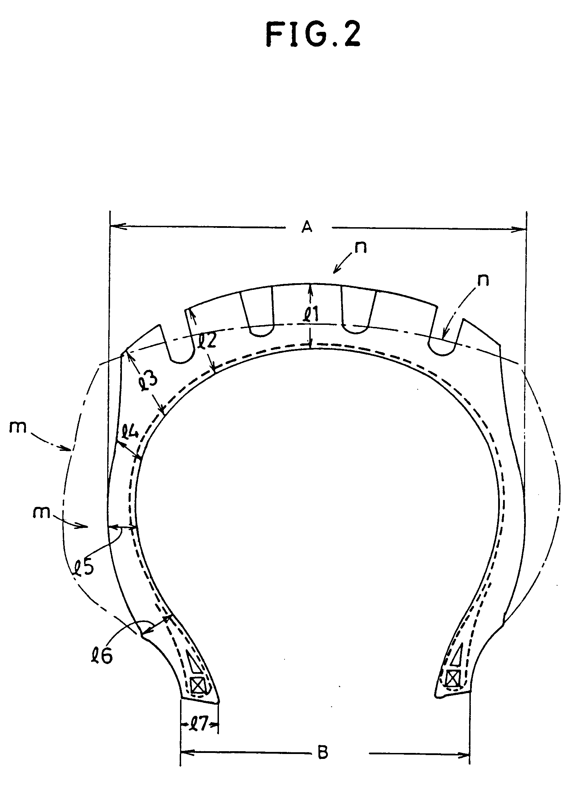

Such a conventional motor cycle tyre is shown in Fig.2 where the carcass has a round profile under the low pressure conditions, which shape is almost the same as that for ordinary use on the road at a higher pressure (normal pressure). Therefore, when loaded, the sidewall portions m are deformed such that the whole of the sidewall portion m is curved outwards of the tyre in an arc. However, the deformation is liable to occur unstably and alternatively on the sidewall portions, which greatly deteriorates running stability.

Further, as the deformation of the sidewall portions flattens the tread portion n, the suppleness of the tread portion is apt to be lost.

Furthermore, the deformation occurs all over the tyre as mentioned above, and accordingly it takes a long time to recover from the deformed state to its normal state since the air pressure is low, which also deteriorates running stability.

It is therefore, an object of the present invention to provide a low pressure motorcycle tyre in which running stability is improved by arranging specially the tyre shape.

According to one aspect of the present invention, a low pressure motor cycle tyre has a pair of bead portions, a tread portion, and a pair of sidewall portions, and the tyre comprises a bead core disposed in each bead portion, and a carcass extending between the bead portions and secured to the bead cores characterised in that the ratio (A/B) of the tyre section width (A) to the bead width (B) when the tyre is mounted on its regular rim and inflated to 15% of the maximum pressure is not less than 1.90 and not more than 2.20 where the tyre section width (A) is measured at the same radial height as the carcass maximum section width point (p) in the tyre sidewall portions at which the section width of the carcass is maximum.

As a result axially outward swelling of the sidewall portions is increased more than in a conventional tyre sidewall, and the sidewall shape under low pressure conditions becomes similar to its loaded shape, that is, the difference between the loaded shape and free shape become small. Thus deformation occurs with more stability in both the sidewall portions, and the amount of deformation is less. As a result, running stability is improved while maintaining the tyre stiffness in both the vertical and lateral directions.

However, if the A/B ratio is more than 2.20, the amount of swelling is excessive and the vertical stiffness has a tendency to decrease, and further, tyre performance at normal pressure such as wear resistance and cut resistance of the tread are sacrificed. On the other hand, when the A/B ratio is less than 1.90, the lateral stiffness is decreased and running stability is lost.

Further the carcass profile is preferably arranged as follows:
a middle portion (C) of the carcass profile defined between a point (W1) and a point (W2) is formed by an arc (Sc) having a curvature of a single radius (Rc) and having a centre (o1) inside the tyre;
the point (W1) is located radially outside the above mentioned carcass maximum section width point (p);
the point (W2) is located radially inside the carcass maximum section width point (p);
the radial distance (L2) between the points (W2) and (p) is more than 1.0 times and not more than 1.2 time the radial distance (L1) between the points (W1) and (P);
the radial distance (L) between the points (W1) and (W2) is not less than 0.4 times and not more than 0.6 times the radial height (H) of the carcass measured from the bead base (b) to a point (a) on the tyre equator; and
the radial distance (L3) measured from the bead base (b) to the above mentioned radially inner point (W2) is not less than 0.15 and not more than 0.35 times the above mentioned radial height (H) of the carcass.

Accordingly, the curved middle portions of the carcass induce stable bending deformation in the sidewall portions and restrict the deformation to a narrow region so that the recovery time is shortened. Further, the middle portions help increase the vertical stiffness of the tyre under both low pressure and normal pressure operation.

Furthermore, a radially inner portion (U) of the carcass profile, defined as the portion extending from the radially inner point (W2) to the bead base region, is preferably formed by an arc (Su) having a centre (o2) outside the tyre and having a curvature of a single radius (Ru) smoothly connected to the above mentioned arc (Sc) of the middle portion (C) at the point (W2) as a point of inflection therebetween. Therefore, the inner portion of the carcass promotes the occurrence of the above mentioned stable deformation of the sidewall and increases the lateral stiffness of the tyre.

An embodiment of the present invention will now be described, by way of example only, with reference to the drawings, in which:
Fig. 1. is a cross sectional view showing an embodiment of the present invention, and
Fig. 2. is a cross sectional view showing a conventional tyre.

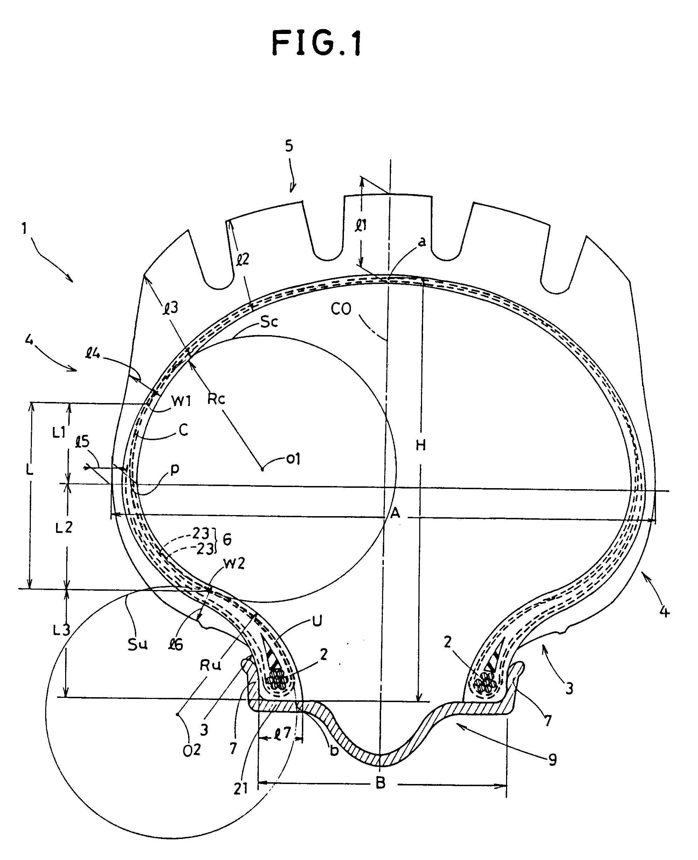

In Fig1. a low pressure motorcycle tyre 1 according to the present invention is 4.00R18 4PR in size, and is shown mounted on a regular rim 9 of size 2.15x18 and inflated to 15% of the maximum pressure. The maximum air pressure for this tyre size is 2.25 kgf/sq.cm. the carcass profile at the 15% pressure is different from the fully inflated profile but is almost the same as the moulded profile of the tyre.

The tyre 1 has a tread portion 5, a pair of bead portions 3 and sidewalls. Each bead includes a bead core 2 and a carcass 6 extending between the bead portions 3 through the sidewalls 4 and the tread portions 5.

The rim 9 is a drop centre rim having a tyre mounting well in the centre thereof, and a pair of bead seats 21 for the tyre bead portions 3 are formed one on each side of the, and from the axially outer edge of each bead seat a rim flange 7 extends radially outwardly along the outside of the tyre bead portion 3.

The carcass 6 comprises at least one ply 23 of cords laid at an angle of 30 to 90 degrees to the tyre equator CO and turned up around the bead cores 2 from the axially inside to the outside thereof to be secured thereto.

For the carcass ply cord, organic fibre cords such as nylon, polyester, rayon and the like are preferably used, but steel cords may be used.

In this example, the carcass 6 is composed of two radial plies 23 in which the cords are laid at about 80 degrees to the tyre equator in the same direction in each ply but in opposite directions with respect to the tyre equator between the adjacent plies.

Further, the tread portion 5 is provided with no belt structure so as not to increase the rigidity of the tread portion.

Thus, the tyre 1 in this embodiment is a beltless radial tyre.

According to the present invention, the ratio A/B of the maximum tyre section width A when the tyre is mounted on the regular rim 9 and inflated to 15% of the maximum pressure, to the bead width must be set to be not less than 1.90 and not more than 2.20.

Here, the maximum tyre section width A is measured in the tyre sidewall region at the same radial height as the maximum carcass section width point p at which the carcass section width is maximum and the bead width B is corresponding to the rim 9 measured between the rim flanges 7.

Further, in this embodiment, the carcass shape or profile when the tyre is mounted on the regular rim 9 and inflated to 15% of the maximum pressure, is arranged as follows:
a middle portion (C) of the carcass profile defined between a radially outward point (W1) and an inward point (W2) is formed by an arc (Sc), where
the outward point (W1) is located radially outside the above mentioned carcass maximum section width point (p), and the inward point (W2) is located inside the carcass maximum section width point (p);
the arc (Sc) has a curvature of a single radius (Rc) and the centre (o1) thereof is positioned inside the tyre and radially outward of the carcass maximum section width point (p) and further on the same side of the tyre equator (CO);
the radial distance (L2) between the inward point (W2) and the carcass maximum section width point (p) is set in the range of from 1.0 to 1.2 times the radial distance (L1) between the outward point (W1) and the point (p);
the radial distance (L) between the outward and inward points (W1) and (W2) is set in the range of from 0.4 to 0.6 times the radial height (H) of the carcass measured from the bead base (b) to a point (a) on the tyre equator; and
the radial distance (L3) measured from the bead base (b) to the inward point (W2) is set in the range of from 0.15 to 0.35 times the above mentioned radial height (H) of the carcass.

Furthermore, a radially inner portion (U) of the above mentioned carcass profile extending from the inward point (W2) to the bead base region is formed by an arc (Us) having a centre (o2) which is positioned outside the tyre and radially inward of the bead base (d).

The arc (Su) has a curvature of a single radius (Ru) and the arc is smoothly connected to the above mentioned arc (Sc) of the middle portion (C) at the inward point (W2) as a point of inflection, and
the radius (Ru) is not larger than the radius (Rc).

Test tyres of size 4.00R18 4PR including working example tyres (Ex.1 & 2) and reference tyres (Ref.1 & 2) each having the structure shown in Fig.1 but partly modified in size and reference tyre 3 according to the prior art shown in Fig.2 were made to allow comparison tests to be considered. The vertical spring coefficients and lateral spring coefficient s were measured for each tyre and further in order to evaluate the running stability of each tyre, tests by a skilled test driver were made.

The test results, together with the specifications of the test tyres, are given Table 1. In Table 1, the test results and the spring coefficients are indicated by an index based on the assumption that the reference tyre 3 is 100, where the larger index is better.

As described above, in a motorcycle tyre according to the present invention, the carcass profile which at low pressure is similar to the moulded profile is formed in this specific shade to reduce the difference from the loaded shape. Therefore, the amount of sidewall deformation when loaded under low pressure conditions is decreased in both the vertical and lateral directions, and as a result, the vertical and lateral stiffnesses of the tyre as improved while keeping suppleness in the tread portion.

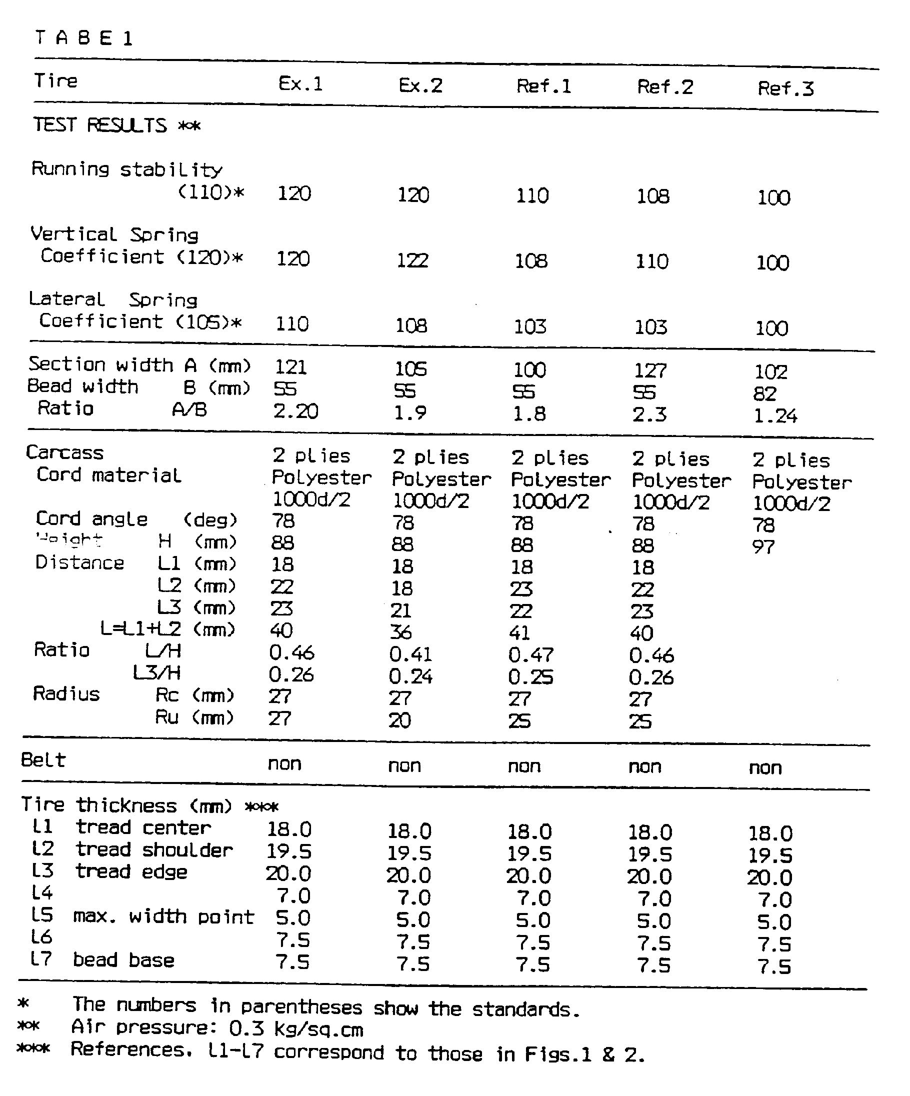

## Claims

1. A motorcycle tyre suitable for use at low pressure comprising a pair of bead cores (2) disposed one in each bead portion (3) of the tyre, and a carcass (6) extending between the bead portions (3) and secured to the bead cores (2) characterised in that when the tyre is mounted on its regular rim (a) and inflated to 15% of the maximum pressure the ratio (A/B) of the tyre section width (A) measured at the same radial height as the carcass maximum section width point (p) to the bead width (B) is not less than 1.90 and not more than 2.20.

2. A tyre according to claim 1 characterised in that the carcass (6) has the following profile a middle portion (C) of the carcass profile defined between a point W1 and a point W2 is formed by an arc (Sc) having a curvature of a single radius (Rc) and having a centre (o1) inside the tyre, where the point W1 is located radially outside the above mentioned carcass maximum section width point (p) ; the point W2 is located radially inside the carcass maximum section width point (p); the radial distance (L2) between the points W2 and (p) is more than 1.0 times and not more than 1.2 times the radial distance (L1) between the points W1 and p ; the radial distance (L) between then points W1 and W2 is not less than 0.4 times and not more than 0.6 times the radial height (H) of the carcass measured from the bead base (b) to a point (a) on the tyre equator and the radial distance (L3) measured from the bead base (b) to the above mentioned radially inher point W2 is not legs than 0.15 and not more than 0.35 times the above mentioned radial height (H) of the carcass.

3. A tyre according to claim 2 characterised in that the radially inner portion (U) of the carcass profile, defined as extending from the radially inner point W2 to the bead base region, is formed by an arc (Su) having a centre (o2) outside the tyre and has a curvature of a single radius (Ru) smoothly connected to the above mentioned arc (Su) of the middle portion (C) at the point W2 as a point of inflection therebetween.

## Patentansprüche

1. Ein für die Verwendung bei niedrigem Druck geeigneter Motoradreifen, der ein Paar von Wulstkernen (2) umfaßt, und zwar einen in jedem Wulstteil (3) des Reifens angeordnet, und eine Karkasse (6) die sich zwischen den Wulstteilen (3) erstreckt und an den Wulstkernen (2) befestigt ist,
dadurch **gekennzeichnet,**
daß, wenn der Reifen auf seiner regulären Felge (a) aufgezogen ist und zu 15% des maximalen Drucks aufgepumpt wird, das Verhältnis (A/B) der Reifenquerschnittsbreite (A) gemessen an der gleichen radialen Höhe wie der maximale Karkassenquerschnittsbreitenpunkt (p) zu der Wulstbreite (B) nicht weniger als 1.90 und nicht mehr als 2.20 beträgt.

2. Ein Reifen nach Anspruch 1,
dadurch **gekennzeichnet,**
daß die Karkasse (6) das folgende Profil hat: ein Mittelteil (C) des Karkassenprofils, das zwischen einem Punkt W1 und einem Punkt W2 definiert ist, wird durch einen Bogen (Sc) mit einer Krümmung eines einzelnen Radius (Rc) und mit einem Mittelpunkt (o1) innerhalb des Reifens gebildet, wobei der Punkt W1 radial außerhalb des oben genannten maximalen Karkassenquerschnittsbreitenpunktes (p) angeordnet ist; der Punkt W2 radial innerhalb des maximalen Karkassenquerschnittsbreitenpunktes (p) angeordnet ist; der radiale Abstand (L2) zwischen den Punkten W2 und p mehr als 1.0 mal und nicht mehr als 1.2 mal der radiale Abstand (L1) zwischen den Punkten W1 und p beträgt; der radiale Abstand (L) zwischen den Punkten W1 und W2 nicht weniger als 0.4 mal und nicht mehr als 0.6 mal die radiale Höhe (H) der Karkasse, gemessen von der Wulstbasis (b) zu einem Punkt (a) auf dem Reifenäquator ist und der radiale Abstand (L3), gemessen von der Wulstbasis (b) zu dem oben genannten radial inneren Punkt W2, nicht weniger als 0.15 und nicht mehr als 0.35 mal der oben erwähnten radialen Höhe (H) der Karkasse ist.

3. Ein Reifen nach Anspruch 2,
dadurch **gekennzeichnet,**
daß der radial innere Teil (U) des Karkassenprofils, festgelegt als sich von dem radial inneren Punkt W2 zu dem Wulstbasisbereich erstreckend, durch einen Bogen (Su) mit einem Mittelpunkt (o2) außerhalb des Reifens gebildet ist und eine Krümmung eines einzelnen Radius (Ru) hat, die glatt mit dem oben genannten Bogen (Su) des Mittelteils (C) an dem Punkt W2 als ein Wendepunkt dazwischen verbunden ist.

## Revendications

1. Pneumatique de motocyclette destiné à être utilisé à basse pression, comprenant deux tringles (2) placées chacune dans une partie de talon (3) du pneumatique, et une carcasse (6) placée entre les parties de talon (3) et fixée aux tringles (2), caractérisé en ce que, lorsque le pneumatique est monté sur sa jante normale (a) et est gonflé à 15 % de la pression maximale, le rapport (A/B) de la largeur (A) en coupe du pneumatique, mesurée à la même hauteur radiale que le point (p) de largeur maximale en coupe de la carcasse, et de la largeur (B) des talons n'est pas inférieur à 1,90 ni supérieur à 2,20.

2. Pneumatique selon la revendication 1, caractérisé en ce que la carcasse (6) a le profil suivant : une partie médiane (C) de profil de carcasse délimitée entre un point W1 et un point W2 est formée par un arc (Sc) ayant un seul rayon de courbure (Rc) et ayant un centre (o1) qui se trouve à l'intérieur du pneumatique, le point W1 étant placé radialement à l'extérieur du point précité (p) de largeur maximale en coupe de la carcasse, le point (W2) étant placé radialement à l'intérieur du point (p) de largeur maximale en coupe de la carcasse, la distance radiale (L2) comprise entre les points W2 et p est supérieure à 1,0 fois et ne dépasse pas 1,2 fois la distance radiale (L1) comprise entre les points W1 et p, la distance radiale (L) comprise entre les points W1 et W2 n'est pas inférieure à 0,4 fois ni supérieure à 0,6 fois la hauteur radiale (H) de la carcasse mesurée de la base de talon (b) à un point (a) sur l'équateur du pneumatique, et la distance radiale (L3) mesurée de la base de talon (b) au point radialement interne précité W2 n'est ni inférieure à 0,15 fois ni supérieure à 0,35 fois la hauteur radiale précitée (H) de la carcasse.

3. Pneumatique selon la revendication 2, caractérisé en ce que la partie radialement interne (U) du profil de carcasse, délimitée entre le point radialement interne W2 et la région de base de talon, est formée par un arc (Su) ayant un centre (o2) qui est à l'extérieur du pneumatique, qui a une courbure ayant un seul rayon (Ru) et qui est raccordé progressivement à l'arc précité (Su) de la partie médiane (C) au point W2 qui constitue un point d'inflexion intermédiaire.
